# EUROPEAN PATENT SPECIFICATION

(11) **EP 3 680 686 B1**
(45) Date of publication and mention of the grant of the patent: **04.10.2023**
(21) Application number: 18854856.4
(22) Date of filing: 21.08.2018
(51) Int. Cl.: G01S 13/74, G01S 13/76, G01S 13/87, G01S 7/292

(54) **RADAR DEVICE AND TRANSPONDER RESPONSE DELAY ACQUIRING METHOD**
RADARVORRICHTUNG UND VERFAHREN ZUR ERFASSUNG DER VERZÖGERUNG EINER TRANSPONDERANTWORT
DISPOSITIF RADAR ET PROCÉDÉ D'ACQUISITION DE RETARD DE RÉPONSE DE TRANSPONDEUR

(30) Priority: 05.09.2017 JP 2017170695
(43) Date of publication of application: 15.07.2020
(73) Proprietor: Furuno Electric Co., Ltd., Nishinomiya-City, Hyogo 662-8580 (JP)
(72) Inventor: YAMABAYASHI, Jun, Nishinomiya-City Hyogo 662-8580 (JP)
(74) Representative: Müller Hoffmann & Partner
(86) International application number: PCT/JP2018/030718
(87) International publication number: WO 2019/049648

(56) References cited:
- JP-A- H0 961 518
- JP-A- 2000 019 246
- JP-A- 2007 132 702
- JP-A- 2013 142 661
- JP-A- 2016 001 104
- JP-A- 2017 026 444
- US-A1- 2002 186 163
- US-A1- 2013 265 188
- US-A1- 2016 363 664

## Description

### TECHNICAL FIELD

The present disclosure mainly relates to a radar device.

### BACKGROUND ART

Conventionally, it has been proposed that a ship performs positioning based on a radar beacon which is a kind of a transponder. Patent Document 1 discloses this kind of radar device.

In the radar positioning system of Patent Document 1, a radar beacon (racon) which is a kind of beacon of a ship transmits a racon response wave to a ship in response to a radar wave from the ship. The racon response wave includes racon identification information as a preamble, and racon positional information including the latitude and longitude of the racon.

In Patent Document 1, when a radar transceiver receives the racon response wave, it identifies a reception time of the racon identification information, and then subtracts a racon response delay from the reception time to calculate a time indicative of an arrival time of the racon response wave. Here, the racon response delay is a processing time required for transmitting the racon response wave after the racon receives the radar wave. Then, the radar transceiver calculates a distance from the radar transceiver to the racon by multiplying a time difference from the transmission timing of the radar wave to the arrival timing of the racon response wave by a traveling speed of the radar wave and then dividing it by 2.

### [Reference Document of Conventional Art]

### [Patent Document]

### Patent Document 1: JP2013-142661A

US 2016/363664 A1 relates to a system for tracking a ground imaging apparatus that includes a plurality of fixed devices and at least one tracked device. The fixed devices are positioned at fixed locations and the tracked device is affixable to the ground imaging apparatus. The fixed devices and the tracked device are configured to transmit and/or receive signals used for time of flight measurements. A processor is configured to determine one or more positions of the tracked device relative to one or more of the fixed devices based upon one or more time of flight measurements between the tracked device and one or more of the fixed devices.

JP 2016 001104 A discloses a ship location positioning device that uses both a response signal from a racon and a radar echo from that racon.

### DESCRIPTION OF THE DISCLOSURE

### [Problem to be Solved by the Disclosure]

In order to obtain the distance from the radar transceiver to the racon with sufficient accuracy, it is important to acquire the accurate racon response delay. However, the racon response delay is different for every model of the racon, and there is an issue of the individual specificity. In this regard, Patent Document 1 does not disclose about how it obtains the racon response delay, and therefore, there is room for an improvement in the positioning accuracy.

The present disclosure is made in view of the above situation, and one purpose thereof is to provide a radar device capable of accurately acquiring a delay time from a detection signal reaching a transponder to the transponder transmitting a response signal.

### [Summary and Effect of the Disclosure]

The problem to be solved by the present disclosure is as described above, and measures to solve the problem and effects thereof are subject-matter of the independent claims and will be described as follows.

Generally, a radar device having the following configuration is provided. That is, this radar device includes a response signal detector, a transponder reflection wave detector, and a response delay acquirer. The response signal detector detects a response signal transmitted from a transponder in response to a detection signal, from a reception signal that is a received reflection wave of the detection signal transmitted from an antenna. The transponder reflection wave detector detects the reflection wave appearing at a timing earlier than the response signal in the reception signal as the reflection wave of the transponder. The response delay acquirer acquires a response delay of the transponder based on a time difference between the reflection wave and the response signal.

According to this configuration, even if the response delay of the transponder differs variously depending on a model, an individual specificity, etc., the radar device can instantly acquire the response delay based on the reflection wave and the response signal. Therefore, a distance between the radar device and the transponder can accurately be acquired with the simple configuration.

In the above radar device, the transponder reflection wave detector may detect the reflection wave appearing at a timing where a time difference from a head timing of the response signal in the reception signal becomes less than a given amount, as the reflection wave of the transponder.

According to this configuration, the reflection wave of the transponder can accurately be detected by utilizing that the response delay of the transponder is normally within a given length.

The radar device may have the following configuration. That is, the response signal of the transponder may include a pseudo noise code. The response signal detector may acquire the head timing of the response signal based on a timing at which a correlation of the reception signal and the pseudo noise code becomes more than a given amount.

According to this configuration, when the response signal has a configuration that the pseudo noise code appears in a given position in the signal, the head timing of the response signal can be acquired accurately.

The radar device may have the following configuration. That is, the transponder reflection wave detector may detect the reflection wave from the reflection waves appearing in the reception signal, of which a length of time from the reflection wave appearing in the reception signal to the reflection wave disappearing from the reception signal is within a given range, as the reflection wave of the transponder. The given range includes a transmission time of the detection signal of a pulse shape.

According to this configuration, when it can be assumed that the transponder is small in the size and is a point-like source of signal reflection, the reflection wave of the transponder can be detected accurately.

In the above radar device, the transponder reflection wave detector may detect the reflection wave of the transponder by processing a plurality of sweeps.

According to this configuration, by reducing influence of noise which is included in the reception signal, the reflection wave of the transponder can be detected accurately.

According to the invention, the radar device has the following configuration. That is, this radar device includes a positional information acquirer, a response time acquirer, and a positioning part. The positional information acquirer may acquire positional information indicative of a position of the transponder from the response signal detected by the response signal detector. The response time acquirer may acquire a response time that is a time from the transmission of the detection signal to the reception of the response signal. The positioning part may acquire a position of the radar device based on the positional information, the response time, and the response delay.

According to this configuration, since the positioning of accurately considering the influence of the response delay can be performed, the positioning accuracy can be increased significantly.

Again generally, the following method of acquiring a transponder response delay is provided. That is, the method includes the steps of transmitting a radio wave of a detection signal from an antenna, receiving by the antenna a reflection wave that is a reflection of the detection signal on a transponder, receiving by the antenna a response signal that is a radio wave transmitted from the transponder in response to the detection signal, and acquiring the transponder response delay based on a time difference between a reception timing of the reflection wave and a reception timing of the response signal.

According to this configuration, even if the response delay of the transponder differs variously depending on the model, the individual specificity, etc., the response delay can instantly be acquired based on the reflection wave and the response signal. Therefore, the distance between the radar device and the transponder can accurately be acquired with the simple configuration.

### BRIEF DESCRIPTION OF DRAWINGS

Fig. 1 is a block diagram illustrating a configuration of a radar device and a racon according to one embodiment of the present disclosure.
Figs. 2(a) and 2(b) are packet structure charts of a response signal transmitted from the racon.
Fig. 3 illustrates timing charts illustrating timings of transmission and reception of a radio wave performed between the radar device and the racon.
Fig. 4 illustrates charts of one modification, illustrating reception signals for a plurality of sweeps during which reflection waves are detected.

### MODES FOR CARRYING OUT THE DISCLOSURE

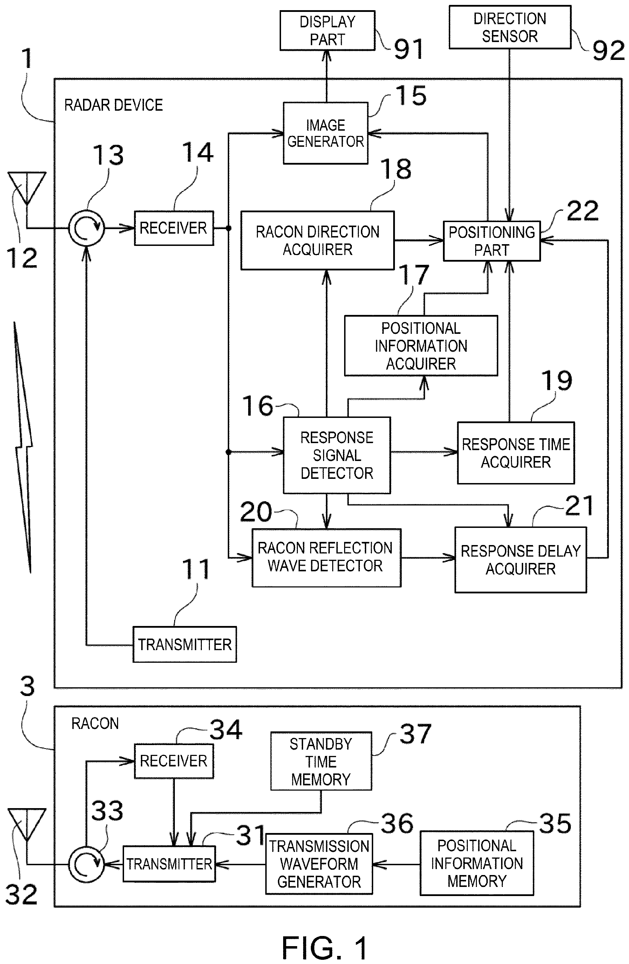

Next, one embodiment of the present disclosure is described with reference to the drawings. Fig. 1 is a block diagram illustrating a configuration of a radar device 1 and a racon 3 according to one embodiment of the present disclosure.

The radar device 1 illustrated in Fig. 1 is provided to a ship (not illustrated) as a movable body. The radar device 1 detects a target object therearound by transmitting from a radar antenna (antenna) 12 a detection signal which is a radio wave, and receiving a reflection wave by the radar antenna 12.

The racon (transponder) 3 transmits a response signal which is a radio wave, from a racon antenna 32 to the radar device 1 in response to the detection signal of the radar device 1. This response signal includes positional information which expresses the position of the racon 3, for example, by latitude and longitude. The radar device 1 can obtain the position of the radar device 1 based on the response signal etc. of the racon 3.

The racon 3 is described. As illustrated in Fig. 1, the racon 3 includes a transmitter 31, the racon antenna 32, a circulator 33, a receiver 34, a positional information memory 35, a transmission waveform generator 36, and a standby time memory 37.

In detail, the racon 3 includes a computer (not illustrated) which is provided with a CPU, a ROM, a RAM, etc. The ROM stores a suitable program which causes the racon 3 to transmit the response signal in response to the detection signal. By collaboration of the software and the hardware, the racon 3 is possible to function as the transmitter 31, the receiver 34, the positional information memory 35, the transmission waveform generator 36, the standby time memory 37, etc.

The transmitter 31 outputs the response signal which responds the detection signal to the racon antenna 32 through the circulator 33, when the receiver 34 (described later) receives the detection signal from the radar device 1.

The racon antenna 32 emits the response signal inputted from the transmitter 31 to the external device as the radio wave. The racon antenna 32 also receives the detection signal of the radar device 1.

The circulator 33 outputs the response signal inputted from the transmitter 31 to the racon antenna 32. The circulator 33 also outputs the detection signal received by the racon antenna 32 to the receiver 34.

The receiver 34 receives the detection signal from the racon antenna 32 through the circulator 33. The receiver 34 acquires a reception end timing of the detection signal, when it detects the detection signal. The reception end timing of the detection signal can be obtained by detecting a falling edge of a pulse, for example, when the detection signal is of a pulse shape. The receiver 34 outputs the acquired reception end timing of the detection signal to the transmitter 31.

The positional information memory 35 is configured as a memory which stores the positional information of the racon 3 set beforehand, in detail, the latitude and longitude indicative of the position of the racon 3. The positional information memory 35 outputs the positional information of the racon 3 to the transmission waveform generator 36.

The transmission waveform generator 36 generates a packet so as to include the positional information inputted from the positional information memory 35 and suitably modulates the packet to generate a waveform of the response signal to be transmitted from the transmitter 31. The transmission waveform generator 36 outputs the waveform of the generated response signal to the transmitter 31.

The standby time memory 37 is configured as a memory which stores a timing at which the response signal is transmitted, in detail, a standby time from the racon 3 ending the reception of the detection signal to the response signal being transmitted. In the standby time memory 37, a suitable value as the standby time is set beforehand before the racon 3 is activated. The standby time memory 37 outputs the stored standby time to the transmitter 31.

With the above configuration, when the receiver 34 of the racon 3 receives the detection signal, the transmitter 31 waits for the standby time stored in the standby time memory 37 from the reception end timing of the detection signal inputted from the receiver 34. At the same time as the completion of the standby, the transmitter 31 transmits the transmission waveform inputted from the transmission waveform generator 36 to the external device from the racon antenna 32 through the circulator 33, as the response signal.

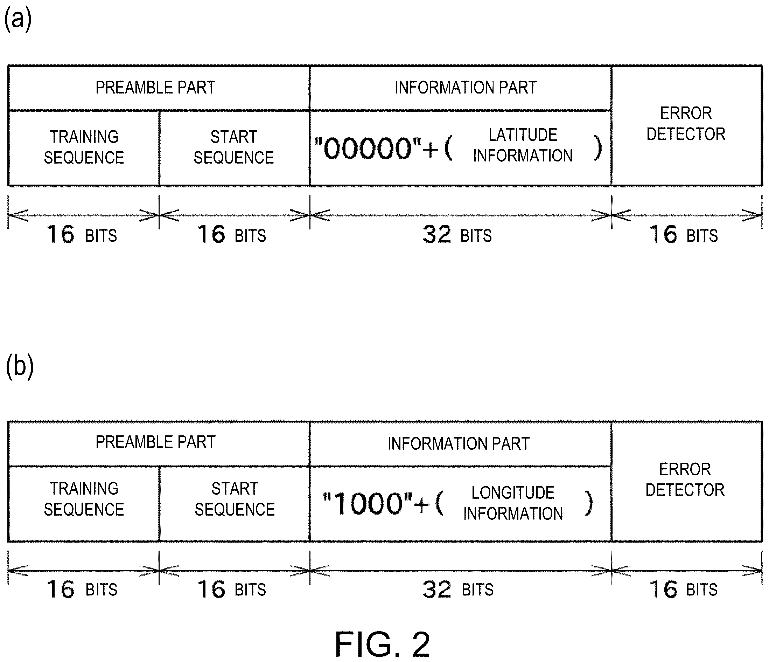

Next, the response signal transmitted from the racon 3 is described in detail with reference to Fig. 2. Fig. 2 is a packet structure chart of the response signal.

In Figs. 2(a) and 2(b), formats of the packets indicative of the response signal transmitted from the racon 3 are illustrated. Fig. 2(a) illustrates a packet in case of responding for latitude, and Fig. 2(b) illustrates a packet in case of responding for longitude. In either case, the response signal is a digital signal having a length of a total of 80 bits, where the leading 32 bits correspond to a preamble part, the subsequent 32 bits correspond to an information part, and the final 16 bits correspond to an error detector.

In the preamble part, the first half 16 bits of 32 bits correspond to a training sequence, and the second half 16 bits correspond to a start sequence. The training sequence is comprised of a bit stream where 0 and 1 appear alternately. The start sequence is comprised of a bit stream of M-sequence code which is a kind of a pseudo noise code.

The information part is a part which describes information indicative of the position of the racon 3. As illustrated in Fig. 2(a), when responding for latitude, the information part has a form in which a 27-bit bit stream indicative of a numerical value of the latitudinal is added after a 5-bit bit stream of "00000." As illustrated in Fig. 2(b), when responding for longitude, the information part has a form in which a 28-bit bit stream indicative of a numerical value of the longitude is added after a 4-bit bit stream of "1000."

The error detector is comprised of a 16-bit checksum value calculated by a method of known Cyclic Redundancy Check (CRC) to the contents of the information part.

The radar device 1 is described. As illustrated in Fig. 1, the radar device 1 includes a transmitter 11, the radar antenna 12, a circulator 13, a receiver 14, an image generator 15, a response signal detector 16, a positional information acquirer 17, a racon direction acquirer 18, a response time acquirer 19, a racon reflection wave detector (transponder reflection wave detector) 20, a response delay acquirer 21, and a positioning part 22.

In detail, the radar device 1 includes a computer (not illustrated), which is provided with a CPU, a ROM, a RAM, etc. The ROM stores a program for realizing a method of acquiring a racon response delay (described later) and a positioning method. By collaboration of the software and the hardware, the radar device 1 is possible to function as the transmitter 11, the receiver 14, the image generator 15, the response signal detector 16, the positional information acquirer 17, the racon direction acquirer 18, the response time acquirer 19, the racon reflection wave detector 20, the response delay acquirer 21, the positioning part 22, etc.

The radar device 1 is electrically connected to a display part 91 and a direction sensor 92.

The display part 91 is configured, for example, as a liquid crystal display, and is capable of displaying various kinds of information on a screen thereof.

The direction sensor 92 is comprised of, for example, a magnetic direction sensor or a gyrocompass. The direction sensor 92 is attached to a suitable position of the ship, and is capable of detecting a bow direction (a direction in which the bow is directed) as an absolute azimuth based on the terrestrial reference.

The transmitter 11 generates the detection signal. Although in this embodiment a semiconductor device is used as the transmitter 11, a magnetron may alternatively be used. The transmitter 11 amplifies the generated detection signal and outputs it to the radar antenna 12 through the circulator 13.

The radar antenna 12 emits the detection signal inputted from the transmitter 11 to the external device as a radio wave, while swiveling in a horizontal plane at a given cycle. Moreover, the radar antenna 12 receives the reflection wave which is a reflection of the transmitted detection signal. In the following description, operation of transmitting a pulse-shaped detection signal once by the radar antenna 12 and receiving the reflection wave by the radar antenna 12 may be referred to as a "sweep." The radar device 1 detects target objects therearound over 360° by repeating the sweep at a short time interval, while swiveling the radar antenna 12.

The circulator 13 outputs the detection signal inputted from the transmitter 11 to the radar antenna 12. The circulator 13 also outputs the reflection wave received by the radar antenna 12 to the receiver 14 as a reception signal. The reception signal may include the response signal transmitted from the racon 3.

The receiver 14 receives the reception signal from the radar antenna 12 through the circulator 13. The receiver 14 performs various kinds of signal processing to the inputted reception signal. The signal processing includes, but is not limited to, amplification. The receiver 14 outputs the processed reception signal to the image generator 15, the response signal detector 16, and the racon reflection wave detector 20.

The image generator 15 performs various kinds of signal processing to the reception signal inputted from the receiver 14. The signal processing includes, but is not limited to, known clutter suppression, sensitivity adjustment, etc. The image generator 15 generates a radar image based on the processed signal. The image generator 15 displays the generated radar image on the display part 91 electrically connected to the radar device 1. The display part 91 may be configured, for example, as a liquid crystal display.

The response signal detector 16 detects the response signal from the racon 3 based on the reception signal inputted from the receiver 14. If the response signal is detected based on the reception signal, the response signal detector 16 acquires a head timing of the response signal by a calculation.

The response signal detector 16 outputs the detected response signal to the positional information acquirer 17. The response signal detector 16 also outputs to the racon direction acquirer 18 information indicative of whether the response signal from the racon 3 is included in the reception signal, each time the reception signal for one sweep is processed. The response signal detector 16 further outputs the head timing of the acquired response signal to the response time acquirer 19, the racon reflection wave detector 20, and the response delay acquirer 21, if the response signal is included in the processed reception signal.

The positional information acquirer 17 demodulates the response signal inputted from the response signal detector 16 and extracting the contents of the information part illustrated in Fig. 2 to acquire the positional information included in the response signal, in detail, the latitude and longitude of the racon 3. At this time, the positional information acquirer 17 performs a CRC check based on the error detector at the end of the response signal to check whether there is an error in the contents of the obtained information part. The positional information acquirer 17 outputs the acquired positional information to the positioning part 22.

The racon direction acquirer 18 acquires a relative direction of the racon 3 with respect to the radar device 1 based on the information inputted from the response signal detector 16. The relative direction can be obtained as an azimuth corresponding to the sweep which includes the response signal. Moreover, when the response signals are detected from a plurality of sweeps, the relative direction may be an azimuth which is obtained by equally dividing an azimuth range corresponding to the plurality of sweeps into two.

The response time acquirer 19 acquires a time from the transmission of the detection signal from the radar antenna 12 to the reception of the response signal of the racon 3 (hereinafter, may be referred to as a "response time") based on the head timing of the response signal inputted from the response signal detector 16. The response time acquirer 19 outputs the acquired response time to the positioning part 22.

The racon reflection wave detector 20 detects the reflection wave which appears at a timing earlier than the head timing of the response signal inputted from the response signal detector 16 as the reflection wave of the racon 3, from the reception signal inputted from the receiver 14. The racon reflection wave detector 20 outputs the reception timing of the detected reflection wave of the racon 3 to the response delay acquirer 21.

The response delay acquirer 21 acquires the response delay of the racon 3 by calculating a time difference between the reception timing of the reflection wave of the racon 3 inputted from the racon reflection wave detector 20 and the head timing of the response signal inputted from the response signal detector 16. Here, the response delay of the racon 3 is a time required from the reception of the detection signal by the racon 3 to the transmission of the response signal by the racon 3. The response delay acquirer 21 outputs the acquired response delay to the positioning part 22.

The positioning part 22 finds the position of the radar device 1 (in detail, latitude and longitude) based on the response time obtained by the response time acquirer 19, the response delay obtained by the response delay acquirer 21, the relative direction of the racon 3 obtained by the racon direction acquirer 18, the absolute direction of the bow obtained by the direction sensor 92, and the positional information of the racon 3 obtained by the positional information acquirer 17.

Although the positioning method is known in the art, it is described briefly. The positioning part 22 finds a time required for a signal going and coming back between the radar device 1 and the racon 3 (hereinafter, may be referred to as a "round-trip time") by subtracting the response delay obtained by the response delay acquirer 21 from the response time obtained by the response time acquirer 19. The distance between the radar device 1 and the racon 3 can be found by dividing the round-trip time by 2 and multiplying it by a speed of the radio wave. Moreover, the absolute direction of the racon 3 when seen from the radar device 1 can be obtained based on the relative direction of the racon 3 with respect to the radar device 1 obtained by the racon direction acquirer 18 and the absolute direction of the bow obtained by the direction sensor 92.

The positioning part 22 finds, by a calculation, the latitude and longitude of the radar device 1 based on the distance between the radar device 1 and the racon 3, the absolute direction of the racon 3 when seen from the radar device 1, and the latitude and longitude of the racon 3 obtained by the positional information acquirer 17. As described above, the positioning of the radar device 1 using the racon 3 is realized.

The positioning part 22 outputs the obtained latitude and longitude of the radar device 1 to the image generator 15. The image generator 15 displays the positioning result of the positioning part 22 on the display part 91, together with a generated radar image. As the display method of the positioning result, the numerical values of the latitude and longitude may be displayed directly, or may be displayed by other methods. Therefore, a user of the radar device 1 can grasp the position of his/her ship by viewing the screen of the display part 91.

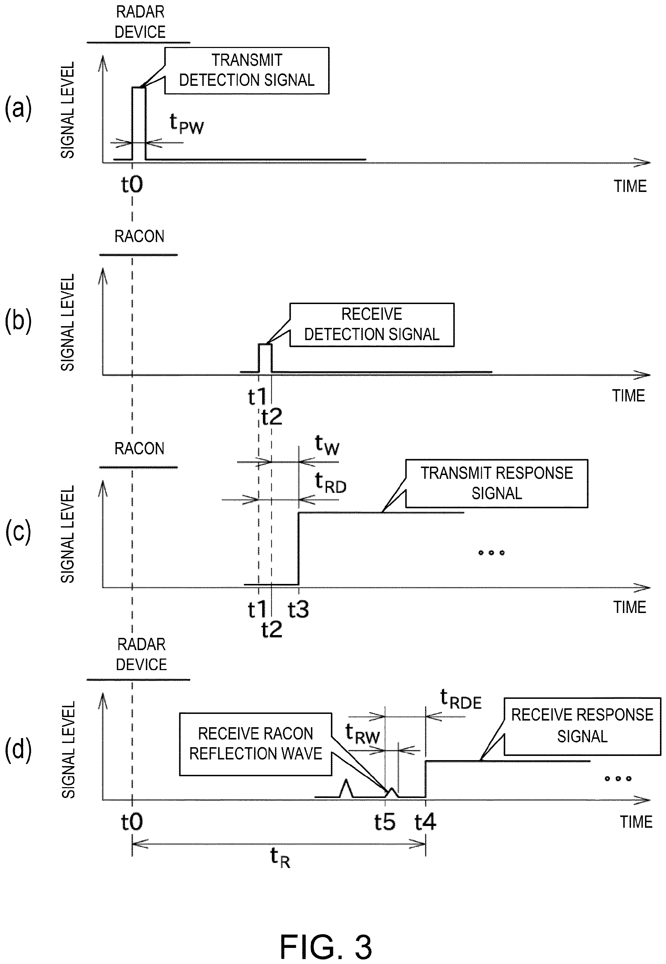

Next, a relation between the detection signal transmitted from the radar device 1 and the response signal transmitted from the racon 3 is described in detail. Fig. 3 illustrates timing charts illustrating timings of transmission and reception of the radio wave performed between the radar device 1 and the racon 3.

Four charts of Fig. 3 illustrate, for a transmission and a reception of the radio wave for one sweep, timings of transmissions and receptions, sequentially from top, of the detection signal transmitted from the radar device 1, the detection signal received by the racon 3, the response signal transmitted from the racon 3, and the response signal received by the radar device 1. In all the four charts, the vertical axis is a signal level and the horizontal axis is time. The times of the horizontal axis correspond to each other in the four charts.

As illustrated in Chart (a) of Fig. 3, suppose a case where the detection signal of which a pulse width is t_{PW} is transmitted from the radar device 1 at a time t0. The detection signal reaches the racon 3 at a time t1 illustrated in Chart (b) of Fig. 3 and is received by the racon 3.

As illustrated in Chart (c) of Fig. 3, when the racon 3 receives the detection signal, it detects a time t2 which is a falling timing of the pulse-shaped detection signal. The racon 3 starts the transmission of the response signal at a time t3 after it waited for a standby time t_{w} from the detected time t2. The response signal reaches the radar device 1 at a time t4 illustrated in Chart (d) of Fig. 3 and is received by the radar device 1.

Thus, when the transmission and reception of the radio wave are performed, the response time acquirer 19 provided to the radar device 1 finds, for positioning, a response time t_{R} which is a time difference between the time t0 at which the radar device 1 transmits the detection signal and the time t4 at which the radar device 1 receives the response signal. However, the response time t_{R} includes a racon response delay t_{RD} which is a time difference from the time t1 at which the detection signal reaches the racon 3 to the time t3 at which the racon 3 starts the transmission of the response signal. Regarding the racon 3 for ships, the racon response delay t_{RD} is not unified although there is an upper limit in the standard, and therefore, the unknown response delay is a cause of deteriorating the positioning accuracy.

In this regard, as illustrated in Chart (d) of Fig. 3, the racon reflection wave detector 20 provided to the radar device 1 of this embodiment detects the reflection wave which appears at a timing earlier than the response signal in the reception signal, as the reflection wave which is a reflection of the detection signal on the racon 3. Then, the response delay acquirer 21 acquires a time difference between a time t5 at which the reflection wave of the racon 3 is received and the time t4 at which the response signal is received, as a racon response delay t_{RDE}.

Since the time difference of reflection wave is zero, if the racon reflection wave detector 20 can detect the reflection wave of the racon 3 accurately, the racon response delay t_{RDE} acquired by the response delay acquirer 21 must be in agreement with the actual racon response delay t_{RD}. The radar device 1 of this embodiment can obtain the accurate positioning result by the positioning part 22 performing the calculation using the racon response delay t_{RDE}.

However, it is thought that the reflection wave which appears at a timing with an excessively large time difference with the head timing of the response signal is not the reflection wave resulted from the detection signal reflected on the racon 3. Therefore, the racon reflection wave detector 20 detects only the reflection wave of which the time difference with the head timing (timing t4) of the response signal inputted from the response signal detector 16 is less than a given amount, as the reflection wave of the racon 3. The upper limit of the time difference may be a value obtained by adding a suitable margin to the upper limit according to the standard of the racon response delay described above. Therefore, the reflection wave of the racon 3 can appropriately be detected.

Moreover, since it can be assumed that the racon 3 is normally small in the size and is almost a point-like source of signal reflection, the width of the reflection wave of the racon 3 should become almost equal to the pulse width t_{PW} of the detection signal. Therefore, the racon reflection wave detector 20 detects only the reflection wave of which the difference between a time t_{PW} from a time when the reflection wave appears to a time when it disappears and the pulse width t_{PW} which is the transmission time of the pulse-shaped detection signal is less than a given amount, as the reflection wave of the racon 3. In other words, the condition to be satisfied by the width of the reflection wave in order for it to be detected as the reflection wave of the racon 3 is a given range which includes the pulse width t_{PW} of the detection signal. Therefore, the reflection wave of the racon 3 can be detected more accurately.

Next, the detection of the head timing of the response signal by the response signal detector 16 is described.

As illustrated in Fig. 2, the start sequence of the preamble part of the response signal is the 16-bit M-sequence code. Since this start sequence is known, the response signal detector 16 finds a correlation between the 16-bit signal which is a replica of the start sequence code, and the reception signal.

According to the nature of the pseudo noise code, a timing at which the replica becomes in agreement with the reception signal indicates the head of the information part subsequent to the start sequence. Thus, the response signal detector 16 detects a timing gone backward a period of time corresponding to 32 bits which is the length of the preamble part from a timing at which the correlation of the replica and the reception signal exceeds a given threshold, as the head timing (time t4 described above) of the response signal. Therefore, the head timing of the response signal can be obtained accurately.

As described above, the radar device 1 of this embodiment includes the response signal detector 16, the racon reflection wave detector 20, and the response delay acquirer 21. The response signal detector 16 detects the response signal transmitted from the racon 3 in response to the detection signal, from the reception signal which is obtained by receiving the reflection wave of the detection signal transmitted from the radar antenna 12. The racon reflection wave detector 20 detects the reflection wave which appears at the timing earlier than the response signal in the reception signal, as the reflection wave of the racon 3. The response delay acquirer 21 acquires the response delay of the racon 3 based on the time difference between the reception timing of the reflection wave and the reception timing of the response signal.

Moreover, the radar device 1 of this embodiment acquires the response delay of the racon 3 by the following method. That is, the radio wave of the detection signal is transmitted from the radar antenna 12. The radar antenna 12 receives the reflection wave which is the reflection of the detection signal on the racon 3. The radar antenna 12 receives the response signal which is the radio wave transmitted from the racon 3 in response to the detection signal. The response delay of the racon 3 is acquired based on the time difference between the reception timing of the reflection wave and the reception timing of the response signal.

Therefore, even if the response delay of the racon 3 differs variously depending on the model, the individual specificity, etc., the radar device 1 can instantly acquire the response delay based on the reflection wave and the response signal. Therefore, the distance between the radar device 1 and the racon 3 can accurately be acquired with the simple configuration.

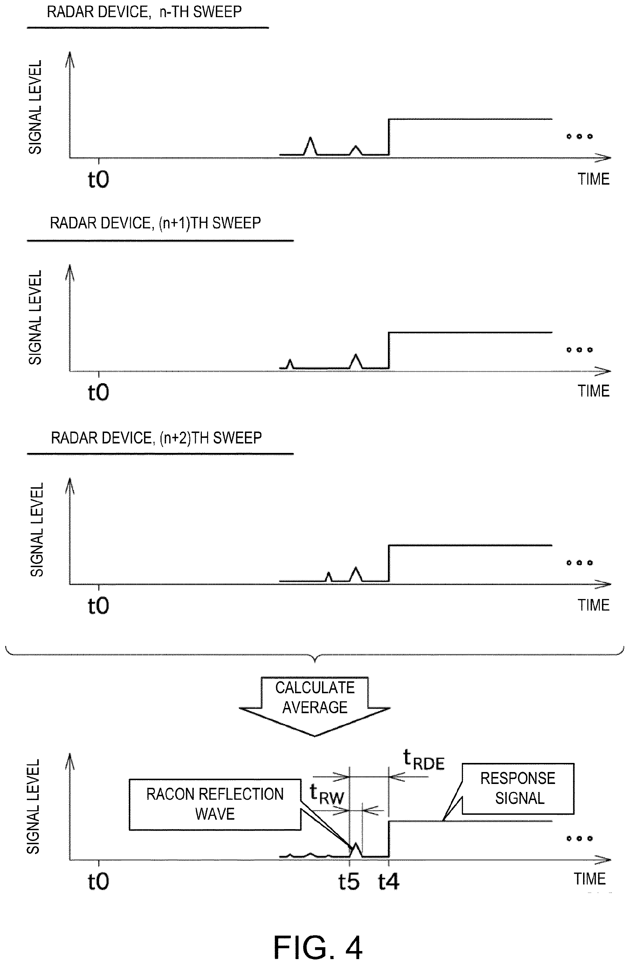

Next, modifications of the embodiment are described. Fig. 4 illustrates charts illustrating a situation of one modification where an average is calculated from the reception signals for a plurality of sweeps, and the reflection wave of the racon is detected from the average. Note that, in the following description, description of configurations the same as or similar to those of the above embodiment may be omitted, while denoting the name of components with the same reference characters.

In the above embodiment, the racon reflection wave detector 20 detects the reflection wave of the racon 3 from the reception signal for one sweep. On the other hand, since the detection signal is repeatedly transmitted, while the direction of the radar antenna 12 is changed little by little, the racon 3 often transmits the response signal corresponding to each of the plurality of sweeps, as illustrated in Fig. 4. Therefore, in this modification, the racon reflection wave detector 20 performs average processing, which is a kind of statistical processing, for the signal levels of the reception signals of the plurality of sweeps which include the response signals, and detects the reflection wave of the racon 3 based on the obtained average value.

In Fig. 4, one example where an average waveform is calculated from the reception signals for three sweeps is illustrated, and it is found that the reflection wave resulted from noise becomes smaller in the average waveform, although it is conspicuous before the average calculation. Therefore, the reflection wave of the racon 3 can be detected more accurately.

Although the suitable embodiment and the modification of the present disclosure are described above, the above configurations may be changed as follows, for example.

Instead of taking the correlation of the replica of the pseudo noise code and the reception signal, the electric power of the preamble part may be detected, and the detection of the head timing of the response signal may be performed based on a timing at which the detected electric power exceeds a given threshold, for example.

The format of the response signal transmitted from the racon 3 may be arbitrary, instead of the formats illustrated in Figs. 2(a) and 2(b).

In the modification of Fig. 4, in order to detect the reflection wave, processing for calculating the average of the reception signals of a plurality of sweeps is performed. However, processings other than the averaging, for example, processing for calculating a correlation between the reception signals of the plurality of sweeps, may also be performed.

A reflector etc. may be attached to the racon 3 so that the detection signal from the radar device 1 is suitably reflected on the racon 3.

The positioning by the radar device 1 and the racon 3 may be utilized independently, or may be utilized as an alternative means when positioning by other positioning devices (e.g., a GNSS positioning device) becomes impossible for a certain reason.

### DESCRIPTION OF REFERENCE CHARACTERS

- 1: Radar Device
- 3: Racon (Transponder)
- 12: Radar Antenna (Antenna)
- 16: Response Signal Detector
- 17: Positional Information Acquirer
- 19: Response Time Acquirer
- 20: Racon Reflection Wave Detector (Transponder Reflection Wave Detector)
- 21: Response Delay Acquirer

## Claims

1. A radar device (1), comprising:
a response signal detector (16) configured to detect a response signal transmitted from a transponder (3) in response to a detection signal, from a reception signal that is a received reflection wave of the detection signal transmitted from an antenna (12);
a transponder reflection wave detector (20) configured to detect the reflection wave appearing at a timing earlier than the response signal in the reception signal as the reflection wave of the transponder (3); and
a positional information acquirer (17) configured to acquire positional information indicative of a position of the transponder (3) from the response signal detected by the response signal detector (16);
**characterised by**
a response delay acquirer (21) configured to acquire a response delay of the transponder (3) based on a time difference between a reception timing of the reflection wave and a reception timing of the response signal, the radar device further comprising:
a response time acquirer (19) configured to acquire a response time that is a time from the transmission of the detection signal to the reception of the response signal; and
a positioning part (22) configured to acquire a position of the radar device (1) based on the positional information, the response time, and the response delay.

2. The radar device (1) of claim 1, wherein the transponder reflection wave detector (20) detects the reflection wave appearing at a timing where a time difference from a head timing of the response signal in the reception signal becomes less than a given amount, as the reflection wave of the transponder (3).

3. The radar device (1) of claim 1 or 2, wherein the response signal of the transponder (3) includes a pseudo noise code, and
wherein the response signal detector (16) acquires the head timing of the response signal based on a timing at which a correlation of the reception signal and the pseudo noise code becomes more than a given amount.

4. The radar device (1) of any one of claims 1 to 3, wherein the transponder reflection wave detector (20) detects the reflection wave from the reflection waves appearing in the reception signal, of which a length of time from the reflection wave appearing in the reception signal to the reflection wave disappearing from the reception signal is within a given range, as the reflection wave of the transponder (3), and
wherein the given range includes a transmission time of the detection signal of a pulse shape.

5. The radar device (1) of any one of claims 1 to 4, wherein the transponder reflection wave detector (20) detects the reflection wave of the transponder (3) by processing a plurality of sweeps.

6. A method of acquiring a transponder response delay, comprising the steps of:
transmitting a radio wave of a detection signal from an antenna;
receiving by the antenna a reflection wave that is a reflection of the detection signal on a transponder (3);
receiving by the antenna a response signal that is a radio wave transmitted from the transponder in response to the detection signal; and
acquiring positional information indicative of a position of the transponder (3) from the received response signal;
**characterised by**
acquiring the transponder response delay based on a time difference between a reception timing of the reflection wave and a reception timing of the response signal,
acquiring a response time that is a time from the transmission of the detection signal to the reception of the response signal; and
acquiring a position of the radar device (1) based on the positional information, the response time, and the response delay.

## Patentansprüche

1. Radarvorrichtung (1), aufweisend:
einen Antwortsignal-Detektor (16), der so konfiguriert ist, dass er ein von einem Transponder (3) als Antwort auf ein Detektionssignal übertragenes Antwortsignal aus einem Empfangssignal detektiert, das eine empfangene Reflexionswelle des von einer Antenne (12) gesendeten Detektionssignals ist,
einen Transponder-Reflexionswellen-Detektor (20), der so konfiguriert ist, dass er die Reflexionswelle, die zu einem früheren Zeitpunkt als das Antwortsignal im Empfangssignal erscheint, als die Reflexionswelle des Transponders (3) detektiert; und
eine Positionsinformations-Erfassungsvorrichtung (17), die so konfiguriert ist, dass sie eine Positionsinformation, die eine Position des Transponders (3) angibt, aus dem durch den Antwortsignal-Detektor (16) detektierten Antwortsignal erfasst;
**gekennzeichnet durch**
eine Antwortverzögerungs-Erfassungsvorrichtung (21), die so konfiguriert ist, dass sie eine Antwortverzögerung des Transponders (3) basierend auf einer Zeitdifferenz zwischen einem Empfangszeitpunkt der Reflexionswelle und einem Empfangszeitpunkt des Antwortsignals erfasst, wobei die Radarvorrichtung ferner aufweist:
eine Antwortzeit-Erfassungsvorrichtung (19), die so konfiguriert ist, dass sie eine Antwortzeit erfasst, die eine Zeit von der Übertragung des Detektionssignals bis zum Empfang des Antwortsignals ist; und
einen Positionsbestimmungsteil (22), der so konfiguriert ist, dass er eine Position der Radarvorrichtung (1) basierend auf der Positionsinformation, der Antwortzeit und der Antwortverzögerung erfasst.

2. Radarvorrichtung (1) nach Anspruch 1, wobei der Transponder-Reflexionswellen-Detektor (20) die Reflexionswelle, die zu einem Zeitpunkt erscheint, zu dem eine Zeitdifferenz von einem Kopf-Zeitpunkt des Antwortsignals im Empfangssignal geringer als ein gegebener Betrag wird, als die Reflexionswelle des Transponders (3) detektiert.

3. Radarvorrichtung (1) nach Anspruch 1 oder 2, wobei das Antwortsignal des Transponders (3) einen Pseudo-Rauschcode enthält und
wobei der Antwortsignal-Detektor (16) den Kopf-Zeitpunkt des Antwortsignals basierend auf einem Zeitpunkt erfasst, zu dem eine Korrelation des Empfangssignals und des Pseudo-Rauschcodes über einen gegebenen Umfang hinausgeht.

4. Radarvorrichtung (1) nach einem der Ansprüche 1 bis 3, wobei der Transponder-Reflexionswellen-Detektor (20) die Reflexionswelle aus den im Empfangssignal erscheinenden Reflexionswellen, deren Zeitdauer vom Erscheinen der Reflexionswelle im Empfangssignal bis zum Verschwinden der Reflexionswelle aus dem Empfangssignal innerhalb eines gegebenen Bereichs liegt, als die Reflexionswelle des Transponders (3) detektiert, und
wobei der gegebene Bereich eine Übertragungszeit des Detektionssignals mit einer Impulsform einschließt.

5. Radarvorrichtung (1) nach einem der Ansprüche 1 bis 4, wobei der Transponder-Reflexionswellen-Detektor (20) die Reflexionswelle des Transponders (3) durch Verarbeiten einer Vielzahl von Sweeps detektiert.

6. Verfahren zum Erfassen einer Transponder-Antwortverzögerung, aufweisend die Schritte:
Übertragen einer Funkwelle eines Detektionssignals von einer Antenne;
Empfangen, mittels der Antenne, einer Reflexionswelle, bei der es sich um eine Reflexion des Detektionssignals an einem Transponder (3) handelt;
Empfangen, mittels der Antenne, eines Antwortsignals, bei dem es sich um eine vom Transponder als Antwort auf das Detektionssignal übertragene Funkwelle handelt; und
Erfassen einer Positionsinformation, die eine Position des Transponders (3) angibt, aus dem empfangenen Antwortsignal;
**gekennzeichnet durch**
Erfassen der Transponder-Antwortverzögerung basierend auf einer Zeitdifferenz zwischen einem Empfangszeitpunkt der Reflexionswelle und einem Empfangszeitpunkt des Antwortsignals,
Erfassen einer Antwortzeit, bei der es sich um die Zeit von der Übertragung des Detektionssignals bis zum Empfang des Antwortsignals handelt; und
Erfassen einer Position der Radarvorrichtung (1) basierend auf der Positionsinformation, der Antwortzeit und der Antwortverzögerung.

## Revendications

1. Dispositif radar (1), comprenant :
un détecteur de signal de réponse (16) configuré pour détecter un signal de réponse transmis depuis un transpondeur (3) en réponse à un signal de détection, depuis un signal de réception qui est une onde de réflexion reçue du signal de détection transmis depuis une antenne (12) ;
un détecteur d'onde de réflexion de transpondeur (20) configuré pour détecter l'onde de réflexion apparaissant à un moment antérieur au signal de réponse dans le signal de réception comme onde de réflexion du transpondeur (3) ; et
un acquéreur d'informations de position (17) configuré pour acquérir des informations de position indiquant une position du transpondeur (3) depuis le signal de réponse détecté par le détecteur de signal de réponse (16) ;
**caractérisé par**
un acquéreur de retard de réponse (21) configuré pour acquérir un retard de réponse du transpondeur (3) sur la base d'une différence de temps entre un moment de réception de l'onde de réflexion et un moment de réception du signal de réponse, le dispositif radar comprenant en outre :
un acquéreur de temps de réponse (19) configuré pour acquérir un temps de réponse qui est un temps allant de la transmission du signal de détection jusqu'à la réception du signal de réponse ; et
une partie de positionnement (22) configurée pour acquérir une position du dispositif radar (1) sur la base des informations de position, du temps de réponse et du retard de réponse.

2. Dispositif radar (1) de la revendication 1, dans lequel le détecteur d'onde de réflexion de transpondeur (20) détecte l'onde de réflexion apparaissant à un moment où une différence de temps depuis un moment de tête du signal de réponse dans le signal de réception devient inférieure à une valeur donnée, comme onde de réflexion du transpondeur (3).

3. Dispositif radar (1) de la revendication 1 ou 2, dans lequel le signal de réponse du transpondeur (3) inclut un code de pseudo-bruit, et
dans lequel le détecteur de signal de réponse (16) acquiert le moment de tête du signal de réponse sur la base d'un moment où une corrélation du signal de réception et du code de pseudo-bruit devient supérieure à une valeur donnée.

4. Dispositif radar (1) de l'une quelconque des revendications 1 à 3, dans lequel le détecteur d'onde de réflexion de transpondeur (20) détecte l'onde de réflexion depuis les ondes de réflexion apparaissant dans le signal de réception, dont une longueur de temps allant de l'onde de réflexion apparaissant dans le signal de réception jusqu'à sa disparition du signal de réception est située à l'intérieur d'une plage donnée, comme onde de réflexion du transpondeur (3), et
dans lequel la plage donnée inclut un temps de transmission du signal de détection d'une forme d'impulsion.

5. Dispositif radar (1) de l'une quelconque des revendications 1 à 4, dans lequel le détecteur d'onde de réflexion de transpondeur (20) détecte l'onde de réflexion du transpondeur (3) par traitement d'une pluralité de balayages.

6. Procédé d'acquisition d'un retard de réponse de transpondeur, comprenant les étapes de :
transmission d'une onde radio d'un signal de détection provenant d'une antenne ;
réception, par l'antenne, d'une onde de réflexion qui est une réflexion du signal de détection sur un transpondeur (3) ;
réception, par l'antenne, d'un signal de réponse qui est une onde radio transmise depuis le transpondeur en réponse au signal de détection ; et
acquisition d'informations de position indiquant une position du transpondeur (3) depuis le signal de réponse reçu ;
**caractérisé par**
l'acquisition d'un retard de réponse de transpondeur sur la base d'une différence de temps entre un moment de réception de l'onde de réflexion et un moment de réception du signal de réponse,
l'acquisition d'un temps de réponse qui est un temps allant de la transmission du signal de détection jusqu'à la réception du signal de réponse ; et
acquérir une position du dispositif radar (1) sur la base des informations de position, du temps de réponse et du retard de réponse.
